# EUROPÄISCHE PATENTANMELDUNG

(11) **EP 3 869 524 A1**
(43) Veröffentlichungstag der Anmeldung: **25.08.2021**
(21) Anmeldenummer: 21155944.8
(22) Anmeldetag: 09.02.2021
(51) Int. Cl.: H01B 7/36, G06K 19/077, H01B 13/34

(54) **VORRICHTUNG UND VERFAHREN ZUM BEFESTIGEN EINES TRANSPONDERS AN EINER ELEKTRISCHEN LEITUNG, KONFEKTIONIERUNGSEINRICHTUNG UND ELEKTRISCHE LEITUNG**

(30) Priorität: 24.02.2020 DE 102020104817
(71) Anmelder: Mangelberger, Philip, 91126 Schwabach (DE)
(72) Erfinder: Mangelberger, Philip, 91126 Schwabach (DE)
(74) Vertreter: Dr. Gassner & Partner mbB

(57) **Zusammenfassung**

Vorrichtung (1) zum Befestigen eines Transponders (2) an einer elektrischen Leitung (3), umfassend
- eine erste Zuführungseinrichtung (4), durch die Transponder (2) einem Befestigungsort (5) in der Vorrichtung (1) zuführbar sind,
- eine zweite Zuführungseinrichtung (6), durch die eine Leitung (3) dem Befestigungsort (5) zuführbar ist, und
- ein Befestigungswerkzeug (7), das zum Befestigen des mittels der ersten Zuführungseinrichtung (4) zugeführten Transponders (2) auf dem Äußeren oder in einer Isolierung des mittels der zweite Zuführungseinrichtung (6) zugeführten Leitung (3) am Befestigungsort (5) eingerichtet ist.

## Beschreibung

Die vorliegende Erfindung betrifft eine Vorrichtung zum Befestigen eines Transponders an einer elektrischen Leitung. Daneben betrifft die Erfindung eine Konfektionierungseinrichtung, ein Verfahren zum Befestigen eines Transponders an einer elektrischen Leitung und eine elektrische Leitung.

Sollen Kabelbäume oder Schaltschränke aus mehreren als Einzellader mit einem Leiter und einer äußeren Isolierung ausgebildeten elektrischen Leitungen aufgebaut werden, erfolgt dies nach dem Stand der Technik zumeist teilautomatisiert. Die elektrischen Leitungen werden mittels einer Konfektionierungseinrichtung automatisiert anhand von Montageinformationen, die typischerweise von einem CAD-System bereitgestellt werden, abgelängt, mit endseitigen Anschlussmitteln, wie Aderendhülsen, Gabelkontakten, Ösen, einer Ultraschallverdichtung oder einer Verschweißung versehen und zumeist mittels eines Tintenstrahldruckverfahrens mit den Montageinformationen beschriftet. Die Montage erfolgt dann manuell, wobei ein Werker die einzelnen Leitungen anhand der Beschriftung, der Farbe der Isolierung etc. auswählt und montiert.

Typischerweise unterhalb einer Querschnittsfläche der Leitung von weniger als 0,75 mm² ist eine Beschriftung für das menschliche Auge jedoch nur noch sehr schwer oder sogar gar nicht mehr lesbar und auch nur noch mit großem Aufwand durch ein Tintenstrahldruckverfahren aufbringbar. Auch ein optisches Auslesen der Beschriftung zur Identifizierung der Leitung in einem vollautomatisierten Montageverfahren ist sehr fehleranfällig oder bei Leitungen, die so dünn sind, dass sie nicht mit einer Beschriftung versehen werden können, nicht möglich.

Das Dokument DE 10 2004 051 594 A1 offenbart ein Verfahren zur Herstellung eines Kabels, umfassend folgende Schritte: Zuführung eines Übertragungselements, insbesondere mit elektrischen Leitern und einer Umhüllung; Bereitstellen mehrerer Transponderanordnungen mit jeweils einem Speicher zur Speicherung digitaler Daten; Extrudieren eines Kabelmantels um das Übertragungselement; und Einbringen der mehreren Transponderanordnungen in das Kabel durch Zuführen jeweils einer der mehreren Transponderanordnungen. Bei einem so erhaltenen Kabel befindet sich die Transponderanordnung auf einem bandförmigen Trägerelement zwischen den Übertragungselementen und dem Kabelmantel.

Für elektrische Leitungen, die im Rahmen einer vollautomatisierten Montage von Kabelbäumen oder Schaltschränken verwendet werden sollen, eignet sich ein solches Verfahren bzw. eine solche Leitung jedoch nicht, da hier typischerweise Einzeladern als Leitungen zum Einsatz kommen, die neben ihrer äußeren Isolierung bzw. Umhüllung keinen Kabelmantel aufweisen, sodass ein Transponder zwischen diesen angeordnet werden könnte. Außerdem ist die Transponderanordnung bei dem Verfahren zur Herstellung eines Kabels nach dem Stand der Technik starr im Kabel eingebaut und nicht flexibel an einer beliebigen Stelle anbringbar.

Der Erfindung liegt die Aufgabe zugrunde, eine Möglichkeit zur kontaktlosen Identifizierung von elektrischen Leitungen, insbesondere für die vollautomatisierte Montage von Kabelbäumen und Anschlussschränken, anzugeben.

Zur Lösung dieser Aufgabe wird erfindungsgemäß eine Vorrichtung zum Befestigen eines Transponders an einer elektrischen Leitung vorgeschlagen, umfassend eine erste Zuführungseinrichtung, durch die Transponder einem Befestigungsort in der Vorrichtung zuführbar sind, eine zweite Zuführungseinrichtung, durch die eine Leitung dem Befestigungsort zuführbar ist, und ein Befestigungswerkzeug, das zum Befestigen des mittels der ersten Zuführungseinrichtung zugeführten Transponders auf dem Äußeren oder in einer Isolierung des mittels der zweite Zuführungseinrichtung zugeführten Leitung am Befestigungsort eingerichtet ist.

Die Erfindung beruht auf der Überlegung, den Transponder mittels des Befestigungswerkzeugs unmittelbar auf dem Äußeren der Leitung zu befestigen oder - je nach Wahl des Transponders - in die Isolierung der Leitung einzubringen, um ein Auslesen des Transponders im Rahmen eines vollautomatisierten Montageprozesses, beispielsweise für Kabelbäume oder Schaltschränke, zu erlauben. Mit besonderem Vorteil wird so auch ein kontaktloses Auslesen von als Einzelader ausgebildeten elektrischen Leitungen, die einen Leiter und eine Isolierung aufweisen, ermöglicht. Außerdem lässt sich der Transponder flexibel an einer definierten Position der Leitung, beispielsweise nahe eines Leitungsendes, anbringen, was gerade im Hinblick auf besonderes kleinbauende Transponder mit einer geringen Ausleseweite vorteilhaft ist.

Typischerweise umfasst der Transponder einen RFID-Chip. Allgemein kann der Transponder für den LF-, HF- oder UHF-Bereich bestimmt sein. Der Transponder kann dazu ausgebildet sein, in einem der folgenden Frequenzbänder ausgelesen und/oder beschrieben zu werden: 100 kHz, 125 kHz, 134 kHz, 13,56 MHz, 433 MHz, 868 MHz, 915 MHz, 1800 MHz, 2,4 GHz, 3 GHz oder 4 GHz.

Der Transponder kann in herkömmlicher Form oder als Powder-Tag ausgebildet sein. Alternativ kann der Transponder als lithographisch, beispielsweise mittels Kathodenzerstäubung (Sputtern), hergestellter Tag ausgebildet sind. Dazu kann der Transponder eine Antenne umfassen, auf welche unverpackte RFID-Chips direkt von einem Wafer mittels einer ACP (anisotropic conductive paste) platziert werden. Besonders kleine Krümmungsradien lassen sich dabei realisieren, wenn der Wafer vor einem pick-and-place-Schritt im Rahmen der Fertigung des Transponders auf 50 µm bis 100 µm verdünnt wird. Zur Verbesserung der Stabilität des Transponders kann der RFID-Chip, insbesondere durch ein Druckverfahren oder durch Laminieren, mit einer Schutzschicht versiegelt sein.

Die Leitung kann eine Querschnittsfläche zwischen 0,25 mm² und 50 mm², insbesondere zwischen 0,25 mm² und 0,5 mm² und/oder zwischen 0,75 mm² und 1,5 mm² zwischen 2,5 und 4 mm² und/oder zwischen 6 mm² und 10 mm² und/oder zwischen 16 und 25 mm² und/oder zwischen 35 und 50 mm², aufweisen. Die Größe des Transponders wird zweckmäßigerweise anhand der Querschnittsfläche der Leitung gewählt.

Typischerweise umfasst die Vorrichtung ein Gehäuse, in welchem sich der Befestigungsort befindet.

Bei der erfindungsgemäßen Vorrichtung wird es bevorzugt, wenn das Befestigungswerkzeug dazu eingerichtet ist, ein adhäsives Substrat, auf dem der Transponder angeordnet ist, an der Leitung zu befestigen. Dazu kann das Befestigungswerkzeug beispielsweise als Abstreifer ausgebildet sein, durch welchen das Substrat von einem Träger, auf dem das Substrat samt Transponder angeordnet ist, auf die Leitung abstreifbar ist. Das Substrat kann rund oder rechteckig sein. Es ist auch möglich, dass mehrere Transponder auf einem Substrat angeordnet sind. Das Substrat ist vorzugsweise eine, insbesondere sehr dünne, Folie. Das Substrat kann aus Polyamid und/oder PET und/oder PEI gebildet sein. Das Substrat kann durch eine auflaminierte Kleberfolie mit Liner auf der Rückseite des RFID-Chips ausgebildet sein. Auf der Klebeseite adhäsiven Substrat kann eine Schutzfolie angeordnet sein, von welcher das Substrat ablösbar ist. Es wird bei der Verwendung eines zum Befestigen des auf dem adhäsiven Substrat angeordneten Transponders eingerichteten Befestigungswerkzeug bevorzugt, wenn die Vorrichtung eine Schutzfolienentfernungseinheit aufweist, welche dazu eingerichtet ist, das Substrat mit dem Transponder vor dem Befestigen von einer Schutzfolie abzulösen. Alternativ oder zusätzlich kann das Befestigungswerkzeug dazu eingerichtet sein, ein Klebemittel auf die Leitung und/oder den Transponder aufzutragen und den Transponder und die Leitung zum Befestigen zusammenzuführen.

Im Hinblick auf ein Befestigen des Transponders in der Isolierung wird es bevorzugt, wenn das Befestigungswerkzeug dazu eingerichtet ist, einen Transponder in die Ummantelung einzubringen. Dazu kann das Befestigungswerkzeug beispielsweise eine Hohlnadel aufweisen, durch welche der Transponder in die Isolierung eingebracht wird, ohne dabei einen elektrischen Leiter der Leitung, zu berühren.

Von Vorteil ist es bei der erfindungsgemäßen Vorrichtung, wenn diese ein weiteres Befestigungswerkzeug oder mehrere weitere Befestigungswerkzeuge umfasst, das zum Befestigen eines Transponders mit einer anderen Größe als das erste Befestigungswerkzeug eingerichtet ist. So können unterschiedliche Transponder, insbesondere in Abhängigkeit der Querschnittsfläche der Leitung, mit nur einer Vorrichtung befestigt werden. Alle Ausführungen zum ersten Befestigungswerkzeug lassen sich analog auf das oder die weiteren Befestigungswerkzeuge übertragen.

Vorzugsweise ist bei der erfindungsgemäßen Vorrichtung - besonders wenn der Transponder auf dem Äußeren der Leitung befestigt wird - ferner ein Entfernungswerkzeug vorgesehen, das zum Entfernen des mittels der Vorrichtung befestigten Transponders von der Leitung eingerichtet ist. Dadurch können defekte oder fehlerhaft beschriebene Transponder noch in der Vorrichtung selbst wieder von der Leitung entfernt werden. Das Entfernungswerkzeug kann einen Schaber umfassen. In bevorzugter Ausgestaltung ist das Entfernungswerkzeug erwärmbar. Der Transponder lässt sich so leichter lösen.

Es wird bei der erfindungsgemäßen Vorrichtung ferner bevorzugt, wenn diese eine Schreibeinrichtung umfasst, die dazu eingerichtet ist, Montagedaten in Abhängigkeit von die Montage der Leitung beschreibenden Montageinformationen auf den zugeführten Transponder zu schreiben. Die Montagedaten können beispielsweise eine Länge der Leitung und/oder eine Farbe der Ummantelung und/oder einen Querschnitt der Leitung und/oder eine Bauart der Leitung, insbesondere ob eine UL- und/oder eine CE- und/oder eine CCC-Anforderung erfüllt ist, und/oder einen Identifikator, beispielsweise eine Nummer und/oder einen Identifikator, beispielsweise eine Nummer, eines Leitungsendes, und/oder ein Montageort der Leitung und/oder einen Montageort der Leitung und/oder eine Art einer Aderendbehandlung, beispielsweise eine Verzinnung, eine Verdichtung, eine Beschichtung, eine Aderendhülse, ein Kabelschuh oder eine Länge einer endseitigen Abisolierung, beschreiben. Alternativ oder zusätzlich können die Montagedaten beschreiben, dass die Leitung an einer Position, die auf die Position, an welcher der Transponder befestigt ist, bezogen ist, zu biegen, einzustecken oder zu befestigen, insbesondere zu verschrauben, ist. Vorzugsweise ist die Vorrichtung dazu eingerichtet, die Montageinformationen von einem CAD-System oder von eine Bedieneinheit zur manuellen Eingabe der Vorrichtung zu erhalten und insbesondere die erhaltenen Montageinformationen in die Montagedaten umzusetzen.

Typischerweise weist die Vorrichtung einen Anschluss auf, an welchen eine Signalleitung zum Erhalten der Montageinformationen anschließbar ist. Alternativ oder zusätzlich weist die Vorrichtung eine Kommunikationseinheit zum drahtlosen Erhalten der Montageinformationen, beispielsweise via Bluetooth oder WLAN, auf.

In bevorzugter Ausgestaltung der erfindungsgemäßen Vorrichtung umfasst diese ferner ein Leseeinrichtung, die dazu eingerichtet ist, kontaktlos Daten aus dem Transponder auszulesen. Es ist insofern auch möglich, dass die Leseeinrichtung einen Identifikator des Transponders ausliest und dazu eingerichtet ist, diesen Identifikator mit Montageinformationen des oder eines CAD-Systems zu registrieren oder zu einer solchen Registrierung bereitzustellen. Es kann auch vorgesehen sein, dass die Vorrichtung eine Anzeigeeinheit aufweist, auf welcher von der Leseeinrichtung ausgelesene Daten anzeigbar sind. Im Allgemeinen kann die Größe der Leseeinrichtung variabel unter Berücksichtigung eines Aspektverhältnisses der Transponder ausgebildet sein.

Es wird bevorzugt, wenn die Schreibeinrichtung und die Leseeinrichtung als ein Lese- und Schreibkopf ausgebildet sind.

Gemäß einer alternativen Ausgestaltung ist die Leseeinrichtung als separate Baueinheit der Vorrichtung ausgebildet. Dadurch können gerade Transponder besonders kleiner Größe ausgelesen werden. Bevorzugt ist die Leseeinrichtung im Bereich der Gehäuseöffnung, durch welche die Transponder in das Gehäuse gelangen, angeordnet.

In einer besonders bevorzugten Ausgestaltung umfasst die Vorrichtung ferner ein Steuermittel, das dazu eingerichtet ist, die Leseeinrichtung zum Auslesen der Montagedaten anzusteuern, die Montagedaten mit der Montageinformation zu vergleichen und das Entfernungswerkzeug zum Entfernen des Transponders anzusteuern, wenn das Vergleichen ergibt, dass die ausgelesenen Montagedaten die Montageinformationen nicht korrekt repräsentieren. So kann sichergestellt werden, dass der Schreibvorgang auf den Transponder erfolgreich war. Mit Vorteil kann ferner vorgesehen sein, dass das Steuermittel dazu eingerichtet ist, das Befestigungswerkzeug nach dem Entfernen des Transponders zum Befestigen eines neuen Transponders anzusteuern. Dadurch kann der Ausschuss der Gegenstände erheblich reduziert werden. Alternativ zum Ansteuern des Entfernungswerkzeugs kann, insbesondere wenn der Transponder in der Umhüllung befestigt wird, vorgesehen sein, dass das Steuermittel die zweite Zuführungseinrichtung zum Auswerfen der Leitung ansteuert und ein Steuersignal zum erneuten Befestigen eines Transponders auf einer neuen Leitung ausgibt. Das Steuersignal kann dem CAD-System oder einer Konfektionierungseinrichtung bereitgestellt werden.

Eine besonders kompakte Realisierung der erfindungsgemäßen Vorrichtung kann erzielt werden, wenn diese ferner eine Komponentenauswahleinrichtung mit einer Halterung für mehrere Komponenten der Vorrichtung und mit einem Antrieb umfasst, durch welchen eine der Komponenten in eine auf dem Befestigungsort gerichtete Arbeitsstellung bewegbar ist. Die Komponenten umfassen vorzugsweise das Befestigungswerkzeug und/oder das weitere Befestigungswerkzeug und/oder das Entfernungswerkzeug und/oder die Schreibeinrichtung und/oder die Leseeinrichtung. In bevorzugter Ausgestaltung ist die Komponentenauswahleinrichtung revolverartig ausgebildet, wobei die Komponente durch eine Drehbewegung in die Arbeitsstellung bewegbar ist.

Bei der erfindungsgemäßen Vorrichtung kann die erste Zuführungseinrichtung eine Aufnahme für auf einer Rolle in gegurteter Form bereitgestellte Transponder aufweisen. Dadurch lassen sich beispielsweise in einer Tape-and-Reel-Verpackung bereitgestellte Transponder aufwandsarm zu führen. Typischerweise befinden sich die Transponder, ggf. auch mit dem Substrat, auf einem auf die Rolle aufgewickelten Träger. Bevorzugt ist die die Aufnahme für die Rolle außerhalb des Gehäuses angeordnet. Das Gehäuse kann eine Gehäuseöffnung zum Einführen der gegurteten Transponder und/oder eine Gehäuseöffnung zum Herausführen eines Trägers nach dem Befestigen aufweisen.

Bevorzugt weist die erste Zuführungseinrichtung ein Fördermittel vor dem Befestigungsort und/oder ein Fördermittel hinter dem Befestigungsort auf. Das oder die Fördermittel sind zweckmäßigerweise im Gehäuse angeordnet. Durch das Vorsehen von zwei Fördermitteln kann der Träger auf Spannung gehalten werden. Das oder ein jeweiliges Fördermittel ist bevorzugt als Bandförderer ausgebildet.

In Weiterbildung kann bei einer ersten Ausgestaltung vorgesehen sein, dass die erste Zuführungseinrichtung ein Schneidwerkzeug aufweist, um den Träger nach dem Befestigen abzuschneiden. Bei einer zweiten Ausgestaltung kann vorgesehen sein, dass die erste Zuführungseinrichtung eine weitere Aufnahme für eine Rolle zum Aufwickeln des Trägers nach dem Befestigen aufweist.

Alternativ oder zusätzlich kann die erste Zuführungseinrichtung bei der erfindungsgemäßen Vorrichtung eine Aufnahme für als Schüttgut bereitgestellte Transponder aufweisen und dazu ausgebildet sein, die in die Aufnahme aufgenommenen losen Transponder zu vereinzeln und dem Befestigungswerkzeug zuzuführen. Dazu kann die erste Zuführungseinrichtung einen Rüttelförderer umfassen. Es kann außerdem vorgesehen sein, dass die erste Zuführungseinrichtung zwischen der Aufnahme und der Komponentenauswahleinrichtung ein Verbindungselement aufweist, durch welches vereinzelte Transponder dem Befestigungswerkzeug über die Komponentenauswahleinrichtung zuführbar sind. Bevorzugt ist die erste Zuführungseinrichtung dazu eingerichtet, die Transponder mittels Blasluft zu vereinzeln.

Es ist bei der erfindungsgemäßen Vorrichtung zweckmäßig, wenn die zweite Zuführungseinrichtung eine, vorzugsweise einen oder zwei Raupenförderer umfassende, Fördereinrichtung für die Leitung aufweist. Bevorzugt sind die Raupenförderer relativ zueinander bewegbar.

Außerdem kann bei der erfindungsgemäßen Vorrichtung vorgesehen sein, dass die zweite Zuführungseinrichtung ein Zentriermittel, beispielsweise eine Zentriermatrize, aufweist, durch welches die Leitung in die Vorrichtung einführbar ist. Typischerweise ist das Zentriermittel dazu ausgebildet, Gegenstände bis zu einer Querschnittsfläche von 70 mm² aufzunehmen. Zweckmäßigerweise ist das Zentriermittel im Gehäuse angeordnet. Das Gehäuse kann dann eine Gehäuseöffnung, durch welche die Leitung in das Zentriermittel einführbar ist, aufweisen.

Um eine präzise Führung der zugeführten Leitung innerhalb der Vorrichtung zu ermöglichen, kann die erfindungsgemäße Vorrichtung ferner eine zur Führung der Leitung entlang des Befestigungsorts ausgebildete Führung aufweisen.

Eine im Hinblick auf unterschiedliche Ausgestaltungen der Leitung flexibel einsetzbare Vorrichtung lässt sich realisieren, wenn die erfindungsgemäße Vorrichtung ferner eine Messeinrichtung umfasst, welche zum, vorzugsweise optischen, Erfassen einer radialen Ausdehnung der Leitung und zum Bereitstellen einer die radiale Ausdehnung beschreibenden Messinformation eingerichtet ist. Eine weitere, insbesondere optische, Messeinrichtung kann hinter dem Befestigungsort vorgesehen und dazu eingerichtet sein, beim Einführen der Leitung in die Vorrichtung eine Position der Leitung auf der Führung und/oder eine Länge der Leitung, insbesondere zur Steuerung der zweiten Zuführungseinrichtung, zu erfassen.

Die oder eine jeweilige Messeinrichtung weist bevorzugt als konfokal-chromatische Sensoren und/oder ein optisches Laser-Mikrometer (einachsig oder zweiachsig) und/oder Laserlinearsensoren auf.

Dabei wird es bevorzugt, wenn in Abhängigkeit der Messinformation die Komponentenauswahleinrichtungen relativ zum Befestigungsort bewegbar ist und/oder die Fördereinrichtung relativ zum Befestigungsort bewegbar ist und/oder das Zentriermittel relativ zum Befestigungsort bewegbar ist und/oder die Führung relativ zum Befestigungsort bewegbar ist. Typischerweise sind zum Bewegen der zuvor genannten Komponenten Linearachsen vorgesehen. Außerdem kann ein Durchmesser der Durchgangsöffnung des Zentriermittels in Abhängigkeit der Messinformation vorgebbar sein.

Vorzugsweise umfasst die erfindungsgemäße Vorrichtung ferner eine Aufbewahrung, in welcher die mit dem Transponder versehene Leitung aufnehmbar, insbesondere aufwickelbar, ist. Dadurch lassen sich auch längere Gegenstände, insbesondere wenn mehrere Transponder auf diese aufzubringen sind, ordentlich aufbewahren.

Bei einer bevorzugten Ausgestaltungsform der erfindungsgemäßen Vorrichtung umfasst diese ein Aufstellmittel, welches dazu eingerichtet ist, die Vorrichtung zur manuellen Bedienung durch eine Bedienperson aufzustellen. Die Bedienperson kann mithin manuell einzelne Gegenstände in die Vorrichtung einführen und diese mit dem Transponder versehen und ggf. beschreiben lassen. Auf einer Anzeigeeinheit können Montagedaten zur Prüfung durch die Bedienperson anzeigbar sein. Mittels der Bedieneinheit können die Montageinformationen durch die Bedienperson eingebbar sein.

In einer alternativen Ausgestaltungsform ist der erfindungsgemäßen Vorrichtung dazu eingerichtet, als Modul in eine Konfektionierungseinrichtung eingesetzt werden. So lässt sich das Befestigen des Transponders mit besonderem Vorteil automatisiert in einen Konfektionierungsprozess einbinden.

Die der Erfindung zugrunde liegende Aufgabe wird ferner gelöst durch eine Konfektionierungseinrichtung, umfassend ein oder mehrere Module zur Konfektionierung, insbesondere ein Modul zum Ablängen der Leitung und/oder ein Modul zur Aderendbehandlung, und eine erfindungsgemäße Vorrichtung, die als weiteres Modul der Konfektionierungseinrichtung ausgebildet ist.

Die der Erfindung zugrunde liegende Aufgabe wird ferner gelöst durch ein Verfahren zum Befestigen eines Transponders an einer elektrischen Leitung, umfassend folgende Schritte: Zuführen eines Transponders an einen Befestigungsort, Zuführen einer Leitung, an der der Transponder zu befestigen ist, an den Befestigungsort, und Befestigen des zugeführten Transponders auf dem Äußeren oder in einer Isolierung der zugeführten Leitung am Befestigungsort. Typerweise wird als elektrische Leitung eine Einzelader verwendet.

Im Rahmen des Verfahrens können ein oder mehrere Transponder an der Leitung befestigt werden. Bevorzugt wird der oder ein Transponder endseitig an der Leitung befestigt. Mehrere Transponder können über die Länge der Leitung individuell verteilt befestigt werden.

Die der Erfindung zugrunde liegende Aufgabe wird ferner gelöst durch eine elektrische Leitung mit einem Leiter und einer Isolierung, wobei die Leitung durch das erfindungsgemäße Verfahren erhältlich ist oder auf dem Äußeren der Isolierung oder in der Isolierung ein Transponder befestigt ist. Der Transponder kann mittels eines Substrats zwischen diesem und der Isolierung befestigt sein. Dabei überlappt das Substrat typischerweise den Transponder. Alternativ kann der Transponder mittels einer zwischen diesem und der Isolierung angeordneten Klebeschicht befestigt sein.

Sämtliche Ausführungen zur erfindungsgemäßen Vorrichtung lassen sich analog auf die erfindungsgemäße Konfektionierungseinrichtung, das erfindungsgemäße Verfahren und die erfindungsgemäße elektrische Leitung übertragen, sodass die zuvor genannten Vorteile auch mit diesen erzielt werden können.

Weitere Vorteile und Einzelheiten der vorliegenden Erfindung ergeben sich aus den im folgenden beschriebenen Ausführungsbeispielen sowie anhand der Zeichnungen. Diese sind schematische Darstellungen und zeigen:
- Fig. 1: eine perspektivische Ansicht eines ersten Ausführungsbeispiels der erfindungsgemäßen Vorrichtung;
- Fig. 2: eine Seitenansicht der Vorrichtung gemäß dem ersten Ausführungsbeispiel bei einer geöffneten Wartungsöffnung;
- Fig. 3: eine Seitenansicht des Inneren des Gehäuses der Vorrichtung gemäß dem ersten Ausführungsbeispiel;
- Fig. 4: eine perspektivische Detailansicht der ersten Zuführungsvorrichtung gemäß dem ersten Ausführungsbeispiel;
- Fig. 5: eine perspektivische Detailansicht des Zentriermittels der zweiten Zuführungseinrichtung gemäß dem ersten Ausführungsbeispiel;
- Fig. 6: eine perspektivische Detailansicht der Fördereinrichtung der zweiten Zuführungseinrichtung gemäß dem ersten Ausführungsbeispiel;
- Fig. 7 und 8: jeweils eine perspektivische Detailansicht um den Befestigungsort der Vorrichtung gemäß dem ersten Ausführungsbeispiel;
- Fig. 9: eine perspektivische Dateiansicht der Führung und der Aufbewahrung gemäß dem ersten Ausführungsbeispiel;
- Fig. 10: eine perspektivische Detailansicht des Schneidwerkzeugs gemäß dem ersten Ausführungsbeispiel;
- Fig. 11: eine perspektivische Detailansicht im Bereich des Standfußes der Vorrichtung gemäß dem ersten Ausführungsbeispiel;
- Fig. 12: eine perspektivische Ansicht eines zweiten Ausführungsbeispiels der erfindungsgemäßen Vorrichtung;
- Fig. 13: eine perspektivische Ansicht eines dritten Ausführungsbeispiels der erfindungsgemäßen Vorrichtung;
- Fig. 14: eine perspektivische Detailansicht der Komponentenauswahleinrichtung gemäß dem dritten Ausführungsbeispiel;
- Fig. 15: eine Frontalansicht der Komponentenauswahleinrichtung gemäß einem vierten Ausführungsbeispiel der erfindungsgemäßen Vorrichtung;
- Fig. 16: eine Prinzipskizze eines Ausführungsbeispiels der erfindungsgemäßen Konfektionierungseinrichtung;
- Fig. 17 bis 19: jeweils eine Querschnittsdarstellung eines Ausführungsbeispiels der erfindungsgemäßen Leitung;
- Fig. 20: eine Prinzipskizze mehrerer Möglichkeiten der Ausbildung von Transpondern und einem Substrat auf einem Träger; und
- Fig. 21: eine perspektivische Ansicht eines fünften Ausführungsbeispiels der erfindungsgemäßen Vorrichtung.

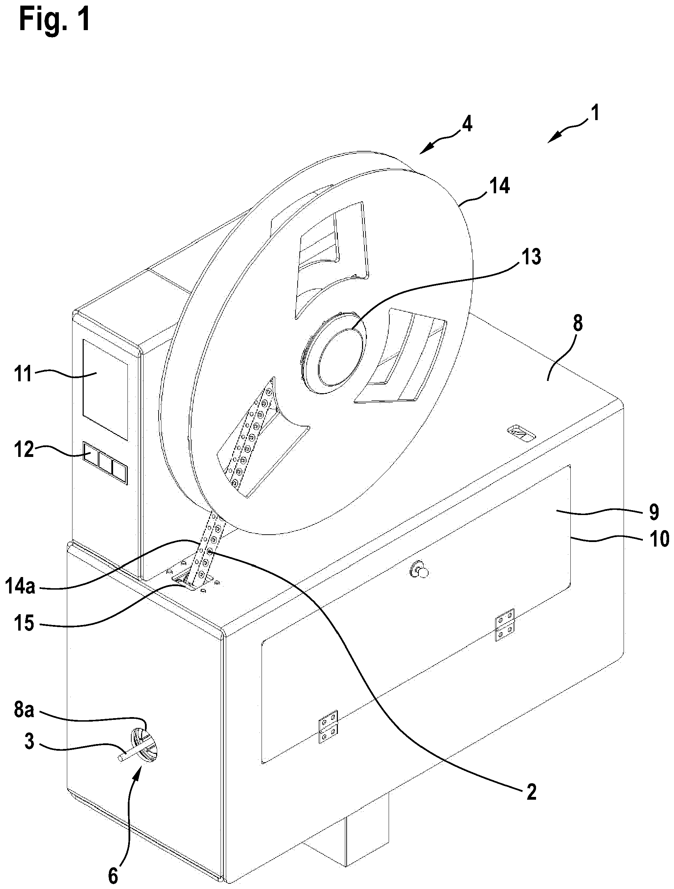

Fig. 1 ist eine perspektivische Ansicht eines ersten Ausführungsbeispiels einer Vorrichtung 1 zum Befestigen eines Transponders 2 an einer elektrischen Leitung 3.

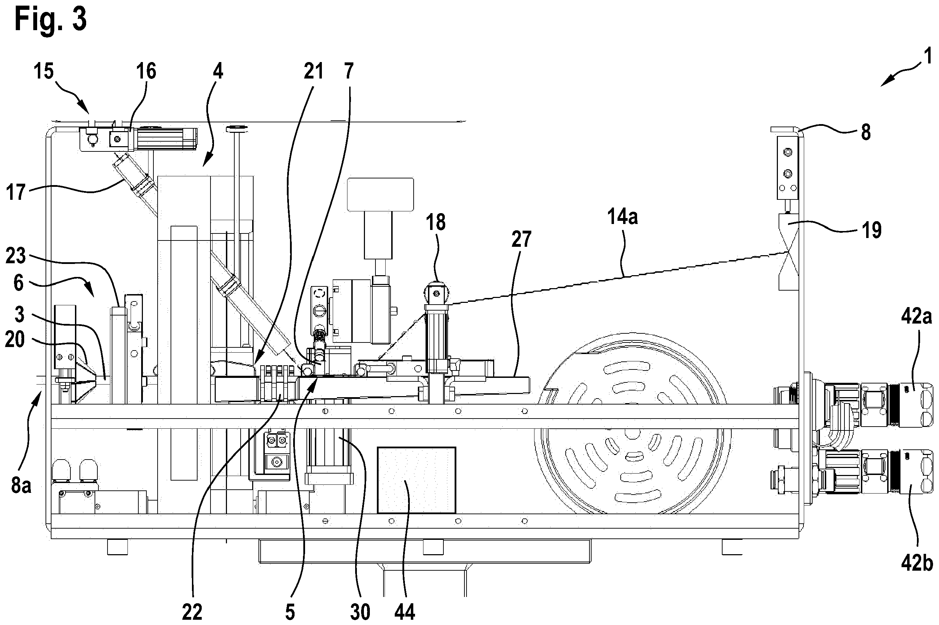

Die Vorrichtung 1 umfasst eine erste Zuführungseinrichtung 4, durch die Transponder 2 einem Befestigungsort 5 (siehe Fig. 3) in der Vorrichtung 1 zuführbar sind, eine zweite Zuführungseinrichtung 6, durch die eine Leitung 3 mit einer als Isolierung ausgebildeten Ummantelung (nicht gezeigt) dem Befestigungsort 5 zuführbar ist und ein erstes Befestigungswerkzeug 7. Das erste Befestigungswerkzeug 7 ist zum Befestigen des mittels der ersten Zuführungseinrichtung 4 zugeführten Transponders auf dem Äußeren der Isolierung des mittels der zweiten Zuführungseinrichtung 6 zugeführten Leitung 3 am Befestigungsort 5 eingerichtet. Die Transponder sind vorliegend als besonderes kleinbauende RFID-Chips, beispielsweise Powder-Tags oder als lithographisch, insbesondere durch Kathodenzerstäubung (Sputtern), hergestellter RFID-Chip, ausgebildet.

Der Befestigungsort 5 und das erste Befestigungswerkzeug 7 sind in einem Gehäuse 8 der Vorrichtung 1 angeordnet. Das Gehäuse 8 weist eine von einer Wartungsklappe 9 verdeckte Wartungsöffnung 10 auf. Ferner sind am Gehäuse 8 eine Anzeigeeinheit 11 und eine Bedieneinheit 12 angeordnet.

Im vorliegenden Ausführungsbeispiel umfasst die erste Zuführungseinrichtung 4 eine Aufnahme 13 für auf einer Rolle 14 in gegurteter Form bereitgestellte Transponder 2. Dabei sind die Transponder auf einem Träger 14a angeordnet. Die Transponder 2 gelangen durch eine Gehäuseöffnung 15 des Gehäuses 8 in dessen Inneres.

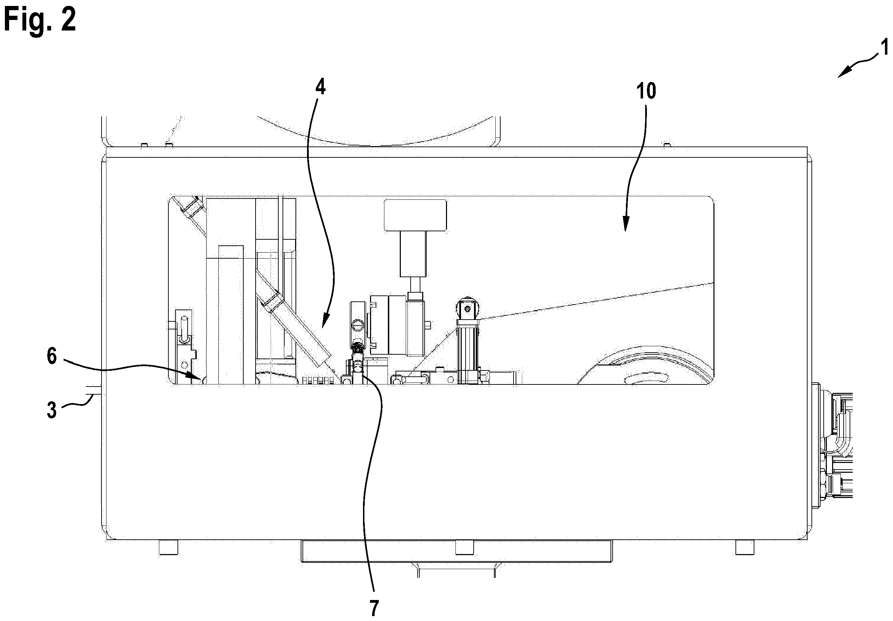

Fig. 2 ist eine Seitenansicht der Vorrichtung 1 gemäß dem ersten Ausführungsbeispiel bei einer geöffneten Wartungsöffnung 10. Im geöffneten Zustand wird insbesondere ein Zugriff auf das Innere des Gehäuses 8 beim Wechseln der Rolle 14 ermöglicht.

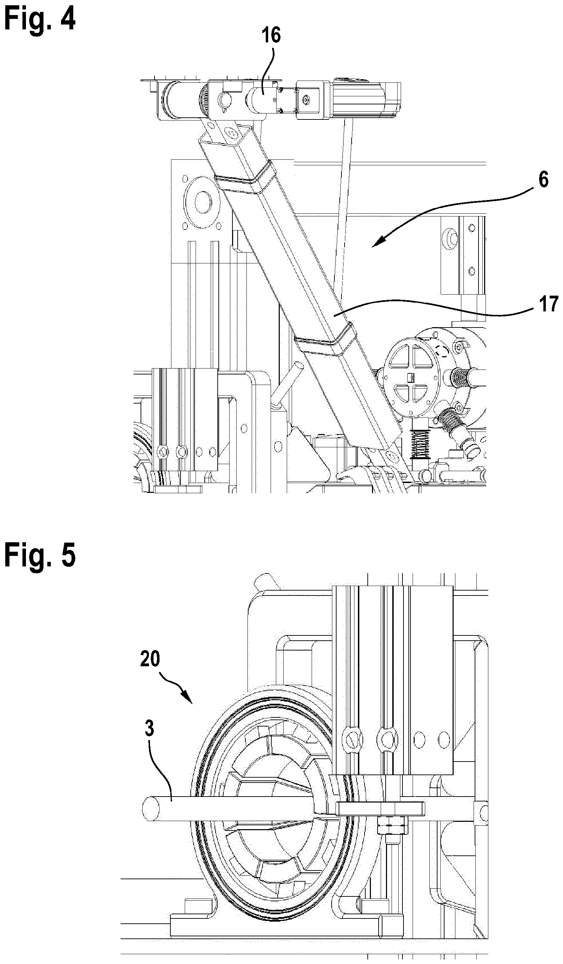

Fig. 3 ist eine Seitenansicht des Inneren des Gehäuses 8 der Vorrichtung 1 gemäß dem ersten Ausführungsbeispiel. Die erste Zuführungseinrichtung 4 umfasst ein im Bereich der Gehäuseöffnung 15 angeordnetes erstes Fördermittel 16, welche die in gegurteter Form bereitgestellten Transponder sukzessive von der Rolle 14 (siehe Fig. 1) abwickelt. Daneben umfasst die erste Zuführungseinrichtung 4 einen Schacht 17, der vom ersten Fördermittel 16 zum Befestigungsort 5 weisend im Gehäuse 8 angeordnet ist. In Fig. 4, die eine perspektivische Detailansicht der ersten Zuführungsvorrichtung 6 gemäß dem ersten Ausführungsbeispiel ist, sind das erste Fördermittel 16 und der Schacht 17 im Detail gezeigt.

Fig. 3 zeigt ferner ein zweites Fördermittel 18 der ersten Zuführungseinrichtung 4, das hinter dem Befestigungsort 5 angeordnet und dazu eingerichtet, den Träger 14a auf Spannung zu halten und nach dem Befestigen zu einem Schneidwerkzeug 19 zu führen. Beide Fördermittel 16, 18 sind als Bandförderer ausgebildet.

Die zweite Zuführungseinrichtung 6 umfasst ein Zentriermittel 20, eine Fördereinrichtung 21 und ein Haltemittel 22. Das Zentriermittel ist hinter einer Gehäuseöffnung 8a angeordnet, um ein Einführen der Leitung 3 in das Gehäuse 8 zu ermöglichen.

Daneben weist die Vorrichtung 1 eine optische erste Messeinrichtung 23 auf, die beispielsweise konfokal-chromatische Sensoren, ein optisches Laser-Mikrometer (einachsig oder zweiachsig) oder Laserlinearsensoren umfasst. Mittels der ersten Messeinrichtung 23 ist eine radiale Ausdehnung der Leitung 3 erfassbar und eine die radiale Ausdehnung beschreibende Messinformation bereitstellbar.

Fig. 5 ist eine perspektivische Detailansicht des Zentriermittels 20 gemäß dem ersten Ausführungsbeispiel.

Das Zentriermittel 20 ist vorliegend als Zentriermatrize ausgebildet, deren Durchmesser an die radiale Ausdehnung, also den Außendurchmesser, der Leitung 3 anpassbar ist. Bevor die Leitung 3 in die Vorrichtung 1 bzw. die zweite Zuführungseinrichtung 6 geführt wird, befindet sich das Zentriermittel 20 in einem geöffneten Zustand, bei dem seine Durchgangsöffnung, insbesondere maximal, ausgeweitet ist. Beim Einführen der Leitung 3 erfasst die Messeinrichtung 23 die radiale Ausdehnung der Leitung 3 und stellt die Messinformation einem Steuermittel bereit, welches das Zentriermittel 20 dazu ansteuert, den Durchmesser der Durchgangsöffnung zu verringern und es so in einen die Leitung 3 einfassenden Zustand zu überführen. So kann die Leitung 3 während des Befestigens in seiner Position gehalten werden. Optional kann das Zentriermittel 20 auch mittels in Abhängigkeit der Messinformation relativ zum Befestigungsort 5 vertikal bewegbar sein. Das Steuermittel steuert auch den übrigen Zuführungsvorgang der Leitung 3.

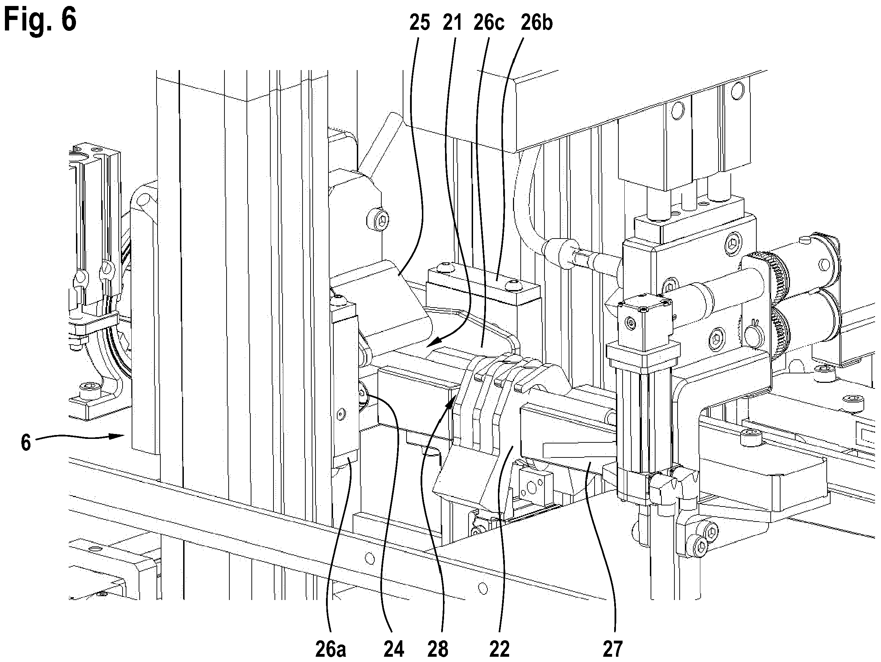

Fig. 6 ist eine perspektivische Detailansicht der Fördereinrichtung 21 der zweiten Zuführungseinrichtung 6.

Die Fördereinrichtung 21 umfasst einen ersten Raupenföderer 24 und ein zweiten Raupenföderer 25, die derart angeordnet sind, dass sie in einem eingeführten Zustand der Leitung 3 dieses an gegenüberliegenden Positionen in Umfangsrichtung entlang einer Axialrichtung der Leitung 3 berühren. Mittels zweier Linearachsen 26a, 26b sind die Raupenförderer 24, 25 einerseits relativ zum Befestigungsort 5 und andererseits relativ zueinander vertikal bewegbar. Dazu ist der erste Raupenförderer 24 an der Linearachse 26a und der zweite Raupenförderer 25 an der Linearachse 26b angeordnet. Die Linearachsen 26a, 26b sind bezogen auf eine Förderrichtung der Raupenförderer 24, 25 versetzt angeordnet. Zum Ausgleich dieses Versatzes ist der zweite Raupenförderer 25 mittels eines Abstandshalters 26c an der Linearachse 26b angeordnet.

Fig. 6 zeigt ferner das Haltemittel 22 in Form eines Greifers, welcher dazu eingerichtet ist, die Leitung 3 während des Befestigens an einer Führung 27 der Vorrichtung 1 zu halten. Dazu sind beidseitige Ausnehmungen 28 an der Führung 27 vorgesehen, in welchen der Greifer angeordnet ist. Mittels der Linearachse 26b und einer weiteren Linearachse 30 (siehe Fig. 3) ist die Führung 27 relativ zum Befestigungsort 5 vertikal bewegbar. Es ist ein Steuermittel vorgesehen, welches die Linearachsen 26a, 26b, 30 in Abhängigkeit der Messinformation zur Relativbewegung der Raupenförderer 24, 25 zueinander sowie zur Relativbewegung der Fördereinrichtung 21 und der Führung 27 zum Befestigungsort 5 ansteuert.

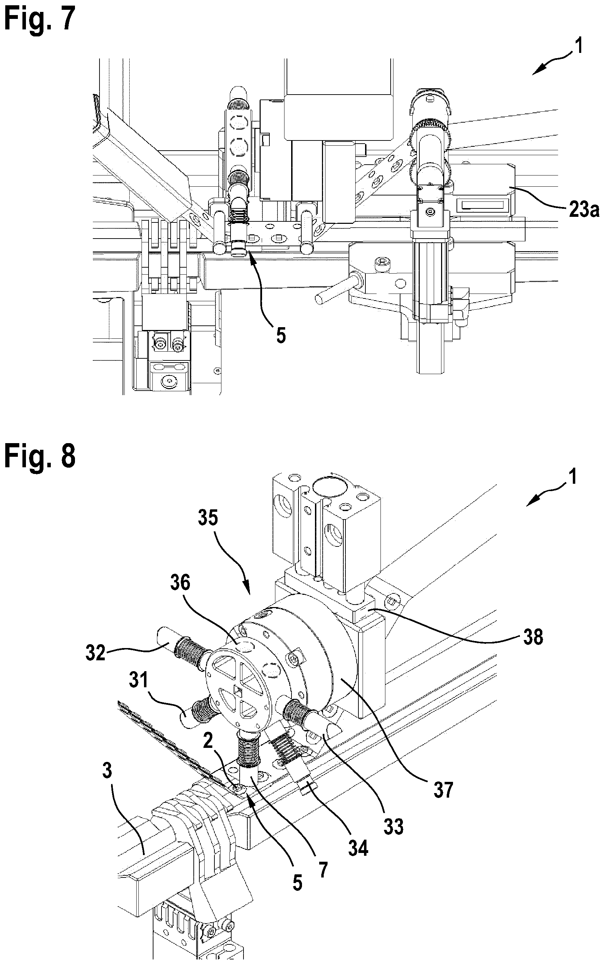

Fig. 7 und Fig. 8 sind jeweils eine perspektivische Detailansicht im Bereich des Befestigungsorts 5 der Vorrichtung 1 gemäß dem ersten Ausführungsbeispiel.

Neben dem ersten Befestigungswerkzeug 7 umfasst die Vorrichtung 1 ein zweites Befestigungswerkzeug 31 und ein drittes Befestigungswerkzeug 32, die jeweils zum Befestigen eines Transponders 2 und/oder eines Kabels 3 mit einer anderen Größe als das erste Befestigungswerkzeug 7 eingerichtet sind. Gezeigt ist ferner ein Entfernungswerkzeug 33 und ein Lese- und Schreikopf 34, welcher die Funktionen einer Schreibeinrichtung und einer Leseeinrichtung realisiert.

Die Befestigungswerkzeuge 7, 31, 32, der Lese- und Schreibkopf 34 sowie das Entfernungswerkzeug 33 sind in einer Halterung 36 einer Komponentenauswahleinrichtung 35 aufgenommen, die ferner einen Antrieb 37 aufweist, durch welchen einer der Komponenten in eine auf dem Befestigungsort 5 gerichtete Arbeitsstellung drehbar ist. Gestrichelt sind weitere mögliche Aufnahmeplätze der Halterung 36 für weitere Werkzeuge oder Komponenten dargestellt, sodass die Halterung 36 insgesamt acht Aufnahmeplätze aufweist. Die Komponentenauswahleinrichtung 35 ist revolverartig ausgebildet, sodass eine jeweilige Komponente durch eine Drehbewegung in die Arbeitsstellung bewegbar ist. Die Komponentenauswahleinrichtung 35 kann insofern auch als Werkzeugrevolver bezeichnet werden. Daneben ist eine Linearachse 38 zum vertikalen Bewegen der Komponentenauswahleinrichtung 35 relativ zum Befestigungsort 5 vorgesehen, wobei die Linearachse 38 durch ein Steuermittel in Abhängigkeit der Messinformation ansteuerbar ist.

In den vorliegenden Figuren ist die Befestigung der Transponder 2 auf der Leitung 3 mittels der Befestigungswerkzeug 30, 32 rein schematisch gezeigt. Die Befestigungswerkzeuge 7, 31, 32 können beispielsweise jeweils dazu eingerichtet sein, ein adhäsives Substrat, auf dem der Transponder 2 angeordnet ist, an der Leitung 3 zu befestigen. Insofern ist ein jeweiliges Werkzeug 7, 31, 32 als Abstreifer ausgebildet, welches den am Substrat befestigten Transponder 2 vom Träger 14a auf die Leitung 3 abstreift und dort verklebt. Es kann auch eine zusätzliche Schutzfolienentfernungseinheit (nicht gezeigt) vorgesehen sein, die eine Schutzfolie zum Schutz des adhäsiven Substrats vor dem Befestigen des Transponders 2 abzieht.

Daneben kann ein jeweiliges Befestigungswerkzeug 7, 31, 32 dazu eingerichtet sein, ein Klebemittel auf die Leitung 3 und/oder den Transponder 2 aufzutragen und den Transponder 2 und die Leitung 3 zum Befestigen zusammenzuführen. In einer alternativen Ausgestaltung ist ein jeweiliges Befestigungswerkzeug 7, 31, 32 dazu eingerichtet, den Transponder 2 in die Isolierung der Leitung 3, vergleichbar mit einem Injektionsvorgang, einzubringen, ohne dass der Transponder 2 den Leiter der Leitung 3 berührt.

Nach dem Befestigen des Transponders 2 an der Leitung 3 dreht die Komponentenauswahleinrichtung 35 den Lese- und Schreibkopf 34 in die Arbeitsstellung. Der Transponder 2 wird sodann mit Montagedaten beschrieben. Dazu weist die Vorrichtung 1 ein Steuermittel auf, dass von einem CAD-System Montageinformationen oder durch Eingabe in die Bedieneinheit 12 erhält, die eine Länge der Leitung 3, ein Material der Leitung 3, eine Farbe der Leitung 3, ein Querschnitt der Leitung 3, eine Bauart der Leitung 3, insbesondere ob CE-, UL- oder CCC-Anforderungen erfüllt ist, einen Identifikator der Leitung 3, ein Montageort der Leitung 3, einen Montageort eines jeweiligen Endes der Leitung 3, eine Anschlussart, und eine Art einer Aderendbehandlung, beispielsweise eine Verzinnung, eine Verdichtung, eine Beschichtung, eine Aderendhülse, einen Kabelschuh oder eine Länge einer Abisolierung, beschreiben. Diese Montageinformationen werden ganz oder teilweise als Montagedaten mittels des Lese- und Schreibkopfes 34 kontaktlos auf den Transponder 2 geschrieben.

Nach Abschluss des Schreibvorgangs steuert das Steuermittel die Leseeinrichtung zum Auslesen der Montagedaten an und vergleicht die ausgelesenen Daten mit den Montageinformationen. Ergibt dieses Vergleichen, dass alle vorgesehenen Montageinformationen als Montagedaten auf den Transponder 2 geschrieben wurden, so wird der Schreibvorgang als erfolgreich gewertet. Ergibt das Vergleichen hingegen, dass die ausgelesenen Montagedaten die Montageinformationen nicht korrekt repräsentieren, so steuert das Steuermittel die Komponentenauswahleinrichtung 35 dazu an, das Entfernungswerkzeug 33 in die Arbeitsstellung zu bringen, welches vorliegend als erwärmbar Schaber ausgebildet ist. Das Entfernungswerkzeug 33 entfernt den Transponder 2 von der Leitung 3. Anschließend steuert das Steuermittel die Komponentenauswahleinrichtung 35 dazu an, mittels eines der Werkzeuge 7, 31, 32 einen neuen Transponder 2 an der Leitung 3 zu befestigen und dieses wie zuvor beschrieben mit den Montagedaten zu beschreiben. Alternativ steuert das Steuermittel die zweite Zuführungseinrichtung 6 zum Auswerfen der Leitung 3 an und gibt ein Steuersignal zur Anforderung einer neuen Leitung aus, um es mit den Montagedaten der ausgeworfenen Leitung 3 zu beschreiben.

Im Übrigen werden die geschriebenen oder gelesenen Montagedaten und/oder das Ergebnis des Vergleichs auf der Anzeigeeinheit 11 dargestellt.

Nach dem erfolgreichen Lese- bzw. Schreibvorgang bestehen grundsätzlich zwei Möglichkeiten: Die Leitung 3 kann mittels der zweiten Zuführungseinrichtung 6 zurück aus der Vorrichtung 1 herausgeführt werden, um anschließend eine neue Leitung zuzuführen. Alternativ dazu wird die Leitung 3 weitergeführt und an einer weiteren Stelle ein weiterer Transponder 2 auf der Leitung 3 angebracht. Ein solcher Transponder kann beispielsweise mit Montagedaten beschrieben werden, die anzeigen, dass die Leitung 3 bei einer Fertigung an einer auf die Stelle, an der der weitere Transponder 2 angebracht ist, gebogen werden soll.

In Fig. 7 ist zudem eine optische zweite Messeinrichtung 23a gezeigt, welche dazu eingerichtet ist, die Lage der Leitung 3 und dessen Länge zu erfassen.

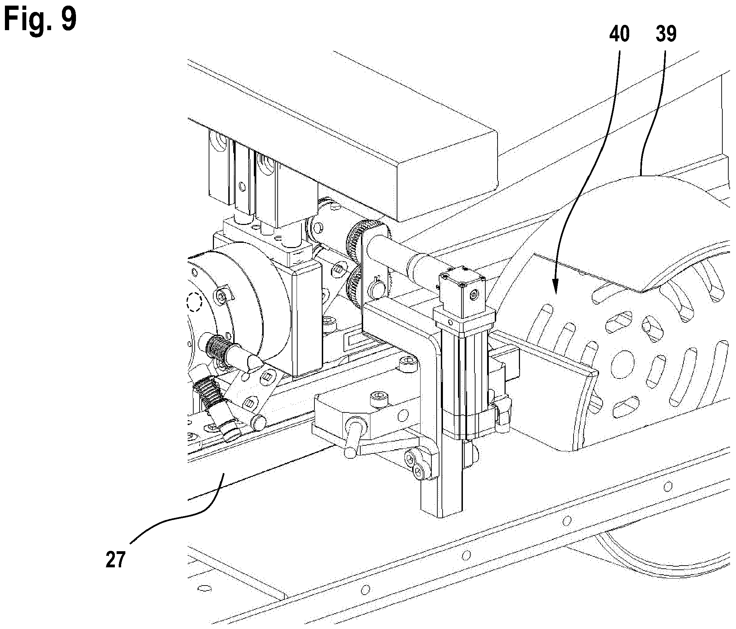

Fig. 9 ist eine perspektivische Detailansicht der Führung 27 und einer Aufbewahrung 39 gemäß dem ersten Ausführungsbeispiel. Wenn die Leitung 3, wie zuvor beschrieben, weitergeführt wird, wird es in der rollenartig ausgebildeten Aufbewahrung 39 aufgewickelt, so dass auch längere Leitungen 3 mit Transpondern 2 versehen werden können. Dazu weist die Führung 27 zu einer Öffnung 40 der Aufbewahrung 39.

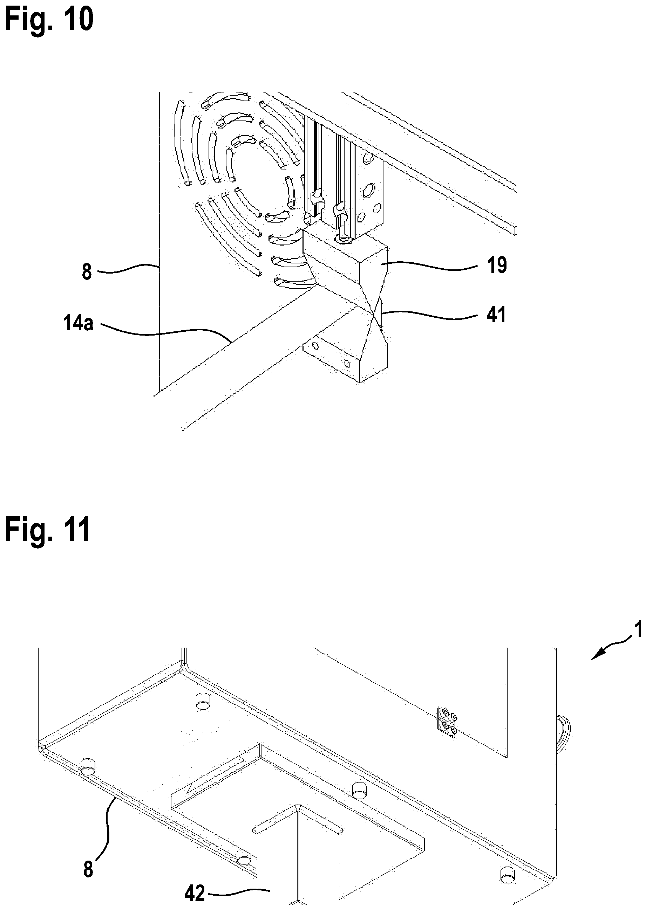

Fig. 10 ist eine perspektivische Detailansicht des Schneidwerkzeugs 19 gemäß dem ersten Ausführungsbeispiel. Das Schneidwerkzeug 19 ist dazu eingerichtet, den keine Transponder mehr aufweisenden Träger 14a, abzuschneiden, sodass leicht entsorgbare Abschnitte des Trägers 14a aus einer Gehäuseöffnung 41 des Gehäuses 8 ausgeworfen werden können.

Fig. 11 ist eine perspektivische Detailansicht im Bereich eines Aufstellmittels 42 der Vorrichtung 1 gemäß dem ersten Ausführungsbeispiel. Das Aufstellmittel 42 in Form eines Standfußes ist am Gehäuse 8 angebracht und erlaubt, die Vorrichtung 1 an einem Bedienplatz für eine Bedienperson zu positionieren. Diese kann dann einzelne Leitungen 3 nacheinander in die Vorrichtung 1 zum Befestigen eines Transponders 2 einführen.

Schließlich zeigt Fig. 3 auch einen ersten Anschluss 42a für eine Stromversorgung der Vorrichtung 1 und einen zweiten Anschluss 42b, an welchen eine Signalleitung zum Erhalten der Montageinformationen anschließbar ist.

Die vorgenannten Steuermittel sind vorliegend durch eine Fig. 3 schematisch dargestellte Steuereinheit 44 realisiert, welche beispielsweise ein Computer oder ein Mikrocontroller ist. Die Steuermittel können auch mehrere Steuereinheiten realisiert sein. Die Steuereinheit 44 ist ebenfalls durch die Wartungsöffnung 10 zugänglich sein.

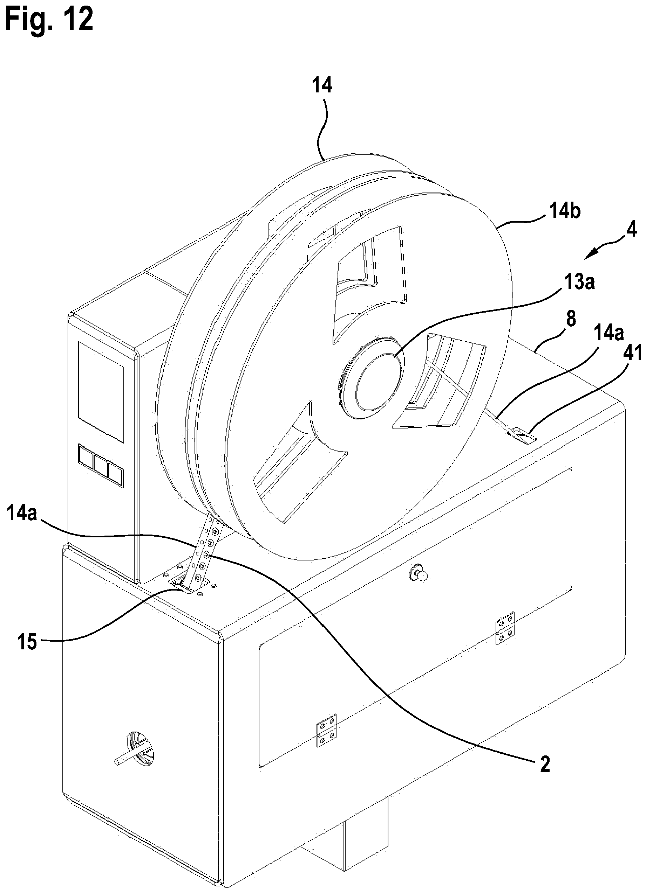

Fig. 12 ist eine perspektivische Ansicht eines zweiten Ausführungsbeispiels der Vorrichtung 1, das bis auf die im Folgenden beschriebenen Abwandlungen der ersten Ausführungsbeispiel entspricht. Beim zweiten Ausführungsbeispiel weist die erste Zuführungseinrichtung 4 eine weitere Aufnahme 13a für eine zusätzlich zur ersten Rolle 14 vorgesehene zweite Rolle 14b auf. Auf die zweite Rolle 14b ist der Träger 14a ohne Transponder nach dem Passieren des Befestigungsorts 5 aufwickelbar. Dazu ist die Gehäuseöffnung 41 auf derselben Gehäusefläche wie die Gehäuseöffnung 15 angeordnet.

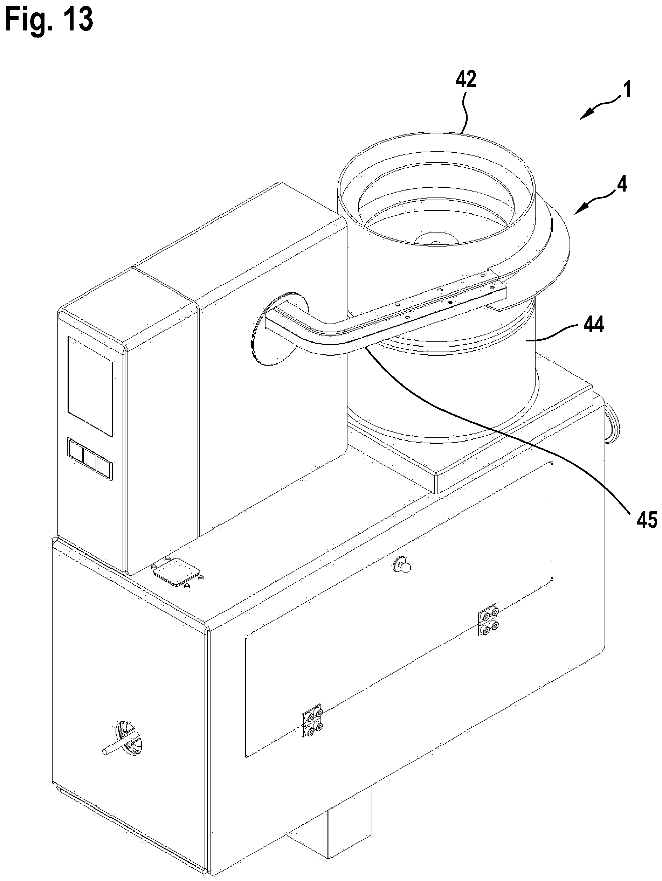

Fig. 13 ist eine perspektivische Ansicht eines dritten Ausführungsbeispiels der Vorrichtung 1, das bis auf die im Folgenden beschriebenen Abwandlungen der ersten Ausführungsbeispiel entspricht.

Die erste Zuführungseinrichtung 4 weist hier eine Aufnahme 42 für als Schüttgut bereitgestellte, in Fig. 13 nicht gezeigte, Transponder 2 auf und ist dazu eingerichtet, die in die Aufnahme 42 aufgenommenen Transponder 2 zu vereinzeln. Die Vereinzelung erfolgt mittels Blasluft. Bei diesem Ausführungsbeispiel werden lose Transponder 2 ohne ein Substrat 14a (siehe Fig. 1) verwendet.

Die erste Zuführungseinrichtung 4 weist ferner einen Rüttelförderer zum Fördern der Transponder 2 und eine Linearstrecke 45, über welche die geförderten Transponder 2 der Vereinzelung zuführbar sind, auf. Der Schacht 17 und die Fördermittel 16, 18 sind beim dritten Ausführungsbeispiel nicht vorgesehen.

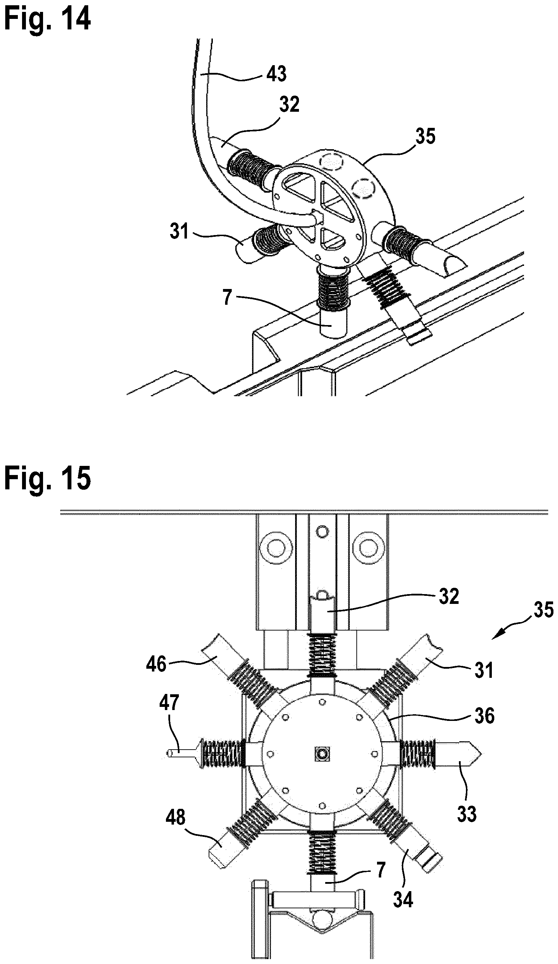

Fig. 14 ist eine perspektivische Detailansicht der Komponentenauswahleinrichtung 35 gemäß dem dritten Ausführungsbeispiel. Die vereinzelten Transponder 2 werden dem sich in der Arbeitsstellung befindlichen Befestigungswerkzeug 7, 31, 32 über ein Verbindungselement 43 der ersten Zuführungseinrichtung 4 zugeführt, das vorliegend exemplarisch als Schlauch ausgebildet ist. Das Verbindungselement 43 ist dazu mit der Komponentenauswahleinrichtung 35 verbunden, über welche die Transponder 2 dem entsprechenden Werkzeug 7, 31, 32 zugeführt werden.

Gemäß weiteren Ausführungsbeispielen, die im Übrigen einem jeweiligen der zuvor beschriebenen Ausführungsbeispiele entsprechen, ist die Vorrichtung 1 dazu eingerichtet ist, als Modul in eine Konfektionierungseinrichtung eingesetzt zu werden.

Fig. 15 ist eine Frontalansicht der Komponentenauswahleinrichtung 35 gemäß einem vierten Ausführungsbeispiel der Vorrichtung 1. Bei diesem Ausführungsbeispiel weist die Halterung 36 acht Aufnahmeplätze auf, die jeweils mit einem Werkzeug belegt sind. Zu sehen sind die Befestigungswerkzeuge 7, 31, 32 sowie ein weiteres Befestigungswerkzeug 46. Ein weiteres Befestigungswerkzeug 47 ist schematisch als Hohlnadel für das Einbringen eines Transponders 2 in die Isolierung der Leitung 3 dargestellt. Ein weiteres Werkzeug für zusätzliche Zwecke ist mit 48 bezeichnet.

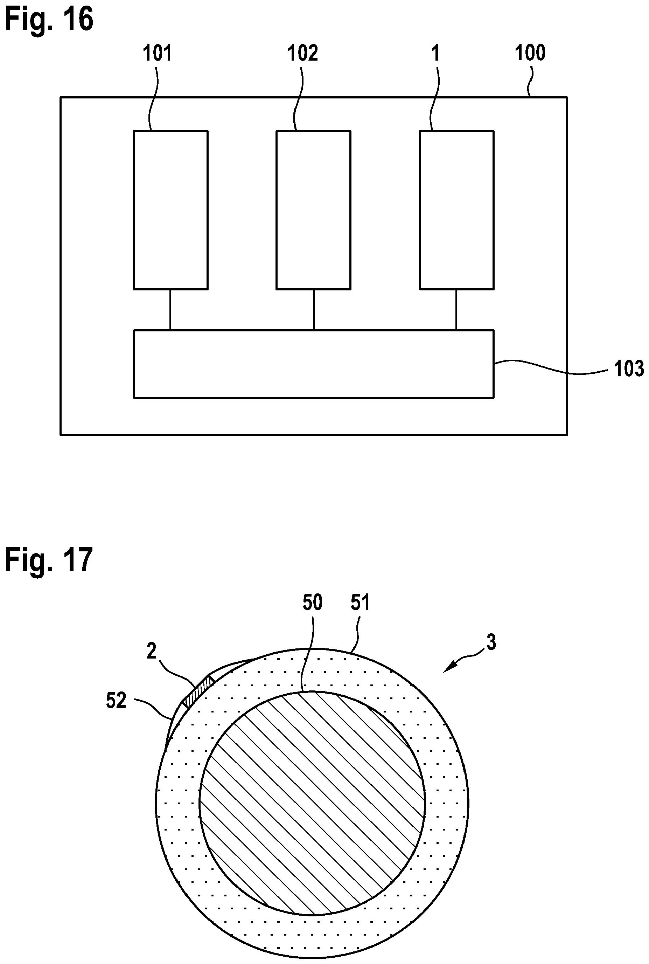

Fig. 16 ist eine Prinzipskizze eines Ausführungsbeispiels einer Konfektionierungseinrichtung 100, die ein Modul 101 zum Ablängen einer Leitung, ein Modul 102 für eine Aderendbehandlung der Leitung sowie eine als Modul ausgebildete Vorrichtung 1 zum Befestigen eines Transponders auf der Leitung entsprechend einem der zuvor beschriebenen Ausführungsbeispiele aufweist. Daneben ist eine gemeinsame Steuereinrichtung 103 zum Ansteuern der Module 101, 102 und der Vorrichtung 1 vorgesehen.

Fig. 17 bis Fig. 19 zeigen jeweils eine Querschnittsdarstellung eines Ausführungsbeispiels einer Leitung 3, wie es nach Durchführung eines von der Vorrichtung 1 durchgeführten Befestigungsverfahrens erhältlich ist.

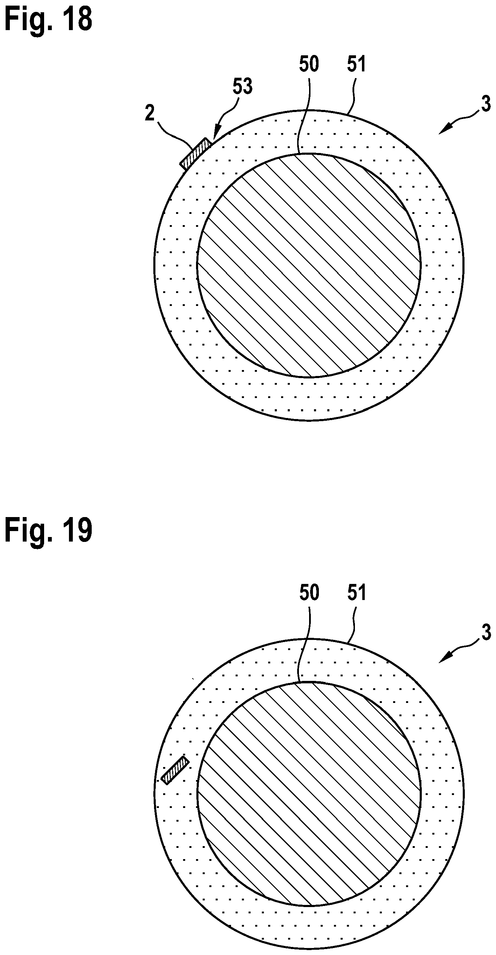

Die Leitung 3 ist eine Einzelader und weist einen elektrischen Leiter 50, der als Litze oder Massivleiter ausgebildet ist, und eine Isolierung 51 auf. Bei dem Ausführungsbeispiel gemäß Fig. 17 ist ein Transponder 2 mittels eins adhäsiven Substrats 52 auf der Isolierung 51 befestigt. Der Transponder 2 befindest sich mithin zwischen dem Substrat 52 und der Isolierung 51. Bei dem Ausführungsbeispiel gemäß Fig. 18 ist der Transponder 2 mittels einer zwischen dem Transponder 2 und der Isolierung 51 angeordneten Klebeschicht 53 befestigt. Bei dem Ausführungsbeispiel gemäß Fig. 19 ist der Transponder 2 vollständig innerhalb der Isolierung 51 befestigt.

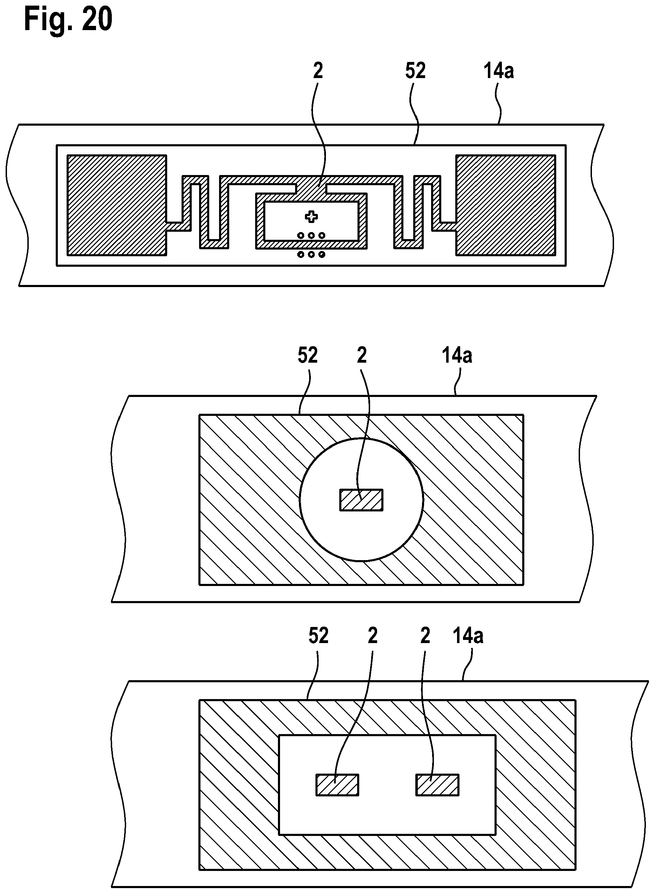

Fig. 20 eine Prinzipskizze mehrerer Möglichkeiten der Ausbildung von Transpondern 2 und einem Substrat 52 auf einem Träger 14a. Bei einer in Fig. 20 oben gezeigten Möglichkeit ist der Transponder 2 samt Antenne lithographisch, beispielsweise mittels Kathodenzerstäubung (Sputtern), hergestellt. Der unverpackte RFID-Chips wird dazu direkt von einem Wafer mittels einer ACP (anisotropic conductive paste) an der Antenne platziert. Der RFID-Chip erlaubt besonders kleine Krümmungsradien, da er vor einem pick-and-place-Schritt im Rahmen der Fertigung des Transponders 2 von 500 µm bis 600 µm auf 50 µm bis 100 µm verdünnt wird. Zur Verbesserung der Stabilität des Transponders 2 ist der RFID-Chip, insbesondere durch ein Druckverfahren oder durch Laminieren, mit einer Schutzschicht versiegelt. Das Substrat 52 ist als sehr dünne Folie auf der Rückseite des RFID-Chips angebracht.

Bei der in der Mitte gezeigten Möglichkeit ist das Substrat 52 rechteckig. Bei der unten gezeigten Möglichkeit ist das Substrat 52 ebenfalls rechteckig und es sind zwei Transponder 2 am Substrat 52 angeordnet. Die Träger 14a und die Substrate 52 sind bei allen Möglichkeiten gleich breit, sodass sie auf einem einheitlichen Rollentyp aufgewickelt werden können. Es unterscheiden sich lediglich die Längen der gezeigten Substrate 52.

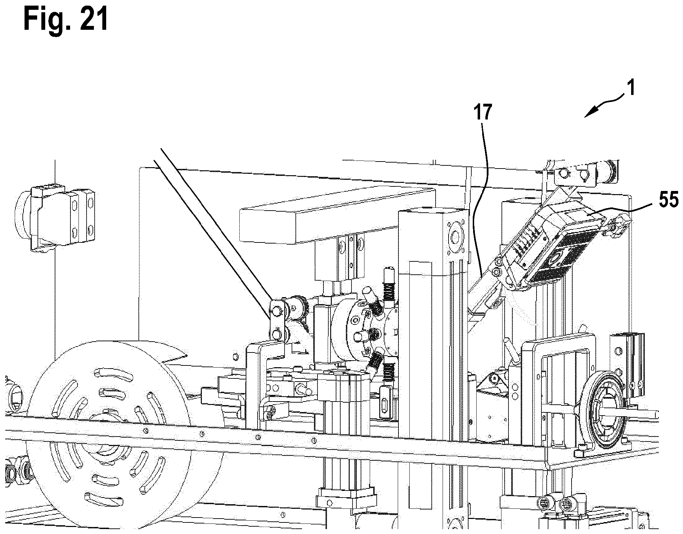

Fig. 21 ist eine perspektivische Ansicht eines fünften Ausführungsbeispiels einer Vorrichtung 1.

Die mit 55 bezeichnete Leseeinrichtung ist hier als separate Baueinheit ausgebildet und im Bereich der Gehäuseöffnung 15 (in Fig. 21 nicht sichtbar) am Schacht 17 angeordnet. Der Lese- und Schreibkopf kann hier entfallen. Die Leseeinrichtung 55 eignet sich besonders für die in Fig. 20 oben dargestellten lithographisch hergestellten Transponder 2. Bei diesem Ausführungsbeispiel wird lediglich ein eineindeutiger Identifikator des Transponders 2 durch die Leseeinrichtung 55 ausgelesen. Die Leseeinrichtung 55 ist dazu eingerichtet, diesen Identifikator zu einer Registrierung mit Montageinformationen des CAD-Systems bereitzustellen. Ein Beschreiben und Überprüfen eines Schreibvorgangs entfallen dann.

Im Übrigen lassen sich alle Ausführungen zum ersten Ausführungsbeispiel auf das fünfte Ausführungsbeispiel übertragen.

## Patentansprüche

1. Vorrichtung (1) zum Befestigen eines Transponders (2) an einer elektrischen Leitung (3), umfassend
- eine erste Zuführungseinrichtung (4), durch die Transponder (2) einem Befestigungsort (5) in der Vorrichtung (1) zuführbar sind,
- eine zweite Zuführungseinrichtung (6), durch die eine Leitung (3) dem Befestigungsort (5) zuführbar ist, und
- ein Befestigungswerkzeug (7), das zum Befestigen des mittels der ersten Zuführungseinrichtung (4) zugeführten Transponders (2) auf dem Äußeren oder in einer Isolierung des mittels der zweite Zuführungseinrichtung (6) zugeführten Leitung (3) am Befestigungsort (5) eingerichtet ist.

2. Vorrichtung nach Anspruch 1, wobei
das Befestigungswerkzeug (7) dazu eingerichtet ist,
- ein adhäsives Substrat, auf dem der Transponder (2) angeordnet ist, an der Leitung (3) zu befestigen, und/oder
- ein Klebemittel auf die Leitung (3) und/oder den Transponder (2) aufzutragen und den Transponder (2) und die Leitung (3) zum Befestigen zusammenzuführen, und/oder
- den Transponder (2) in die Isolierung einzubringen.

3. Vorrichtung nach Anspruch 1 oder 2, ferner umfassend
ein weiteres Befestigungswerkzeug (31, 32), das zum Befestigen eines Transponders (2) mit einer anderen Größe als das erste Befestigungswerkzeug (7) eingerichtet ist.

4. Vorrichtung nach einem der vorhergehenden Ansprüche, ferner umfassend ein Entfernungswerkzeug (33), das zum Entfernen des mittels der Vorrichtung (1) befestigten Transponders (2) von der Leitung (3) eingerichtet ist.

5. Vorrichtung nach einem der vorhergehenden Ansprüche, ferner umfassend eine Schreibeinrichtung, die dazu eingerichtet ist, Montagedaten in Abhängigkeit von die Montage der Leitung (3) beschreibenden Montageinformationen auf den zugeführten Transponder (2) zu schreiben.

6. Vorrichtung nach einem der vorhergehenden Ansprüche, ferner umfassend eine Leseeinrichtung (55), die dazu eingerichtet ist, kontaktlos Daten aus dem Transponder (2) auszulesen.

7. Vorrichtung nach den Ansprüchen 4 bis 6, ferner umfassend
ein Steuermittel, das dazu eingerichtet ist, die Leseeinrichtung zum Auslesen der Montagedaten anzusteuern, die Montagedaten mit der Montageinformation zu vergleichen und
- das Entfernungswerkzeug (33) zum Entfernen des Transponders (2) anzusteuern, oder
- die zweite Zuführungseinrichtung (6) zum Auswerfen der Leitung (3) ansteuert und ein Steuersignal zum erneuten Befestigen eines Transponders (2) auf einer neuen Leitung (3) auszugeben,
wenn das Vergleichen ergibt, dass die ausgelesenen Montagedaten die Montageinformationen nicht korrekt repräsentieren.

8. Vorrichtung nach einem der vorhergehenden Ansprüche, ferner umfassend eine Komponentenauswahleinrichtung (35) mit einer Halterung (36) für mehrere Komponenten der Vorrichtung (1) und mit einem Antrieb (37), durch welchen eine der Komponenten in eine auf den Befestigungsort (5) gerichtete Arbeitsstellung bewegbar ist.

9. Vorrichtung nach Anspruch 8, wobei
die Komponenten
- das Befestigungswerkzeug (7) und/oder
- das weitere Befestigungswerkzeug (31, 32) und/oder
- das Entfernungswerkzeug (33)
- die Schreibeinrichtung und/oder
- die Leseeinrichtung
umfassen.

10. Vorrichtung nach Anspruch 8 oder 9, wobei
die Komponentenauswahleinrichtung (35) revolverartig ausgebildet, wobei die jeweilige Komponente durch eine Drehbewegung in die Arbeitsstellung bewegbar ist.

11. Vorrichtung nach einem der vorhergehenden Ansprüche, wobei
die erste Zuführungseinrichtung (4)
- eine Aufnahme (13) für auf einer Rolle (14) in gegurteter Form bereitgestellte Transponder (2) aufweist und/ oder
- eine Aufnahme (42) für als Schüttgut bereitgestellte Transponder (2) aufweist und dazu ausgebildet ist, die in die Aufnahme (42) aufgenommenen losen Transponder (2) zu vereinzeln und dem Befestigungswerkzeug (7, 31, 32) zuzuführen.

12. Vorrichtung nach einem der vorhergehenden Ansprüche, wobei
die zweite Zuführungseinrichtung (6) eine, vorzugsweise einen oder zwei Raupenföderer (24, 25) umfassende, Fördereinrichtung (21) für die Leitung (3) aufweist.

13. Vorrichtung nach einem der vorhergehenden Ansprüche, wobei
die zweite Zuführungseinrichtung (6) ein Zentriermittel (20) aufweist, durch welches die Leitung (3) in die Vorrichtung (1) einführbar ist.

14. Vorrichtung nach einem der vorhergehenden Ansprüche, ferner umfassend eine zur Führung der Leitung (3) entlang des Befestigungsorts (5) ausgebildete Führung (27).

15. Vorrichtung nach einem der vorhergehenden Ansprüche, ferner umfassend eine Messeinrichtung (23), welche zum, vorzugsweise optischen, Erfassen einer radialen Ausdehnung der Leitung (3) und zum Bereitstellen einer die radiale Ausdehnung beschreibenden Messinformation eingerichtet ist.

16. Vorrichtung nach Anspruch 15, wobei
in Abhängigkeit der Messinformation
- die Komponentenauswahleinrichtung (35) relativ zum Befestigungsort (5) bewegbar ist und/oder
- die Fördereinrichtung (21) der zweiten Zuführungseinrichtung (6) relativ zum Befestigungsort (5) bewegbar ist und/oder
- das Zentriermittel (20) relativ zum Befestigungsort (5) bewegbar ist und/oder
- ein Durchmesser einer Durchgangsöffnung des Zentriermittels (20) vorgebbar ist und/oder
- die Führung (27) relativ zum Befestigungsort (5) bewegbar ist.

17. Vorrichtung nach einem der vorhergehenden Ansprüche, ferner umfassend eine Aufbewahrung (39), in welcher die mit dem Transponder (2) versehene Leitung (3) aufnehmbar, insbesondere aufwickelbar, ist.

18. Vorrichtung nach einem der vorhergehenden Ansprüche, welche
- ein Aufstellmittel (42) umfasst, welches dazu eingerichtet ist, die Vorrichtung (1) zur manuellen Bedienung durch eine Bedienperson aufzustellen, oder
- dazu eingerichtet ist, als Modul in eine Konfektionierungseinrichtung (100) eingesetzt zu werden.

19. Konfektionierungseinrichtung (100), umfassend ein oder mehrere Module (101, 102) zur Konfektionierung einer elektrischen Leitung (3), insbesondere ein Modul (101) zum Ablängen der Leitung (3) und/oder ein Modul (102) zur Aderendbehandlung, und eine Vorrichtung (1) nach einem der Ansprüche 1 bis 17, die als weiteres Modul der Konfektionierungseinrichtung (100) ausgebildet ist.

20. Verfahren zum Befestigen eines Transponders (2) an einer elektrischen Leitung (3), umfassend folgende Schritte:
- Zuführen eines Transponders (2) an einen Befestigungsort (5),
- Zuführen einer Leitung (3), an der der Transponder (2) zu befestigen ist, an den Befestigungsort (5), und
- Befestigen des zugeführten Transponders (2) auf dem Äußeren oder in einer Isolierung der zugeführten Leitung (3) am Befestigungsort (5).

21. Elektrische Leitung (3) mit einem Leiter (50) und einer Isolierung (51), wobei
- die Leitung (3) durch ein Verfahren nach Anspruch 20 erhältlich ist oder
- auf dem Äußeren der Isolierung (51) oder in der Isolierung (51) ein Transponder (2) befestigt ist.
